# EUROPEAN PATENT APPLICATION

(11) **EP 0 983 975 A1**
(43) Date of publication of application: **08.03.2000**
(21) Application number: 98830520.7
(22) Date of filing: 03.09.1998
(51) Int. Cl.: C04B 18/16, C04B 41/50

(54) **A process of making formed bodies consisting of crushed terracotta and a binder**

(71) Applicant: Bricca, Claudio, Perugia, Località Casaglia (IT)
(72) Inventor: Bricca, Claudio, Perugia, Località Casaglia (IT)
(74) Representative: Baldi, Claudio

(57) **Abstract**

Procedure for cold working items realised with a compound consisting of aggregate consisting of dust and/or fragments of terracotta and cement and/or binding resins.

## Description

This patent application for an industrial utility model concerns a procedure for cold working items in agglomerate consisting of crushed terracotta.

Traditional techniques for producing items in terracotta involve modelling clay or other types of soil used and subsequent kiln baking the modelled items.

The need to bake the clay modelled items represents however one of the principle limitations of this technology since it is impossible to produce items in particularly complex shapes, very thin items which frequently and easily break or items with internal stiffening "reinforcement".

The purpose of this invention is to obtain a procedure for the realisation of items in terracotta which does not have any of the problems related to conventional technology.

With the procedure according to the invention, an aggregate consisting of dust and/or fragments of terracotta are mixed with cement and/or binding resins which stably "bind" the dust and terracotta fragments in order to obtain a uniform agglomerate.

Regarding the composition of the above compound consisting of aggregates and binding agents, it can be said that the quantity of binding agent can preferably vary between 200 and 600 kg per cubic metre of agglomerate produced, according to the mechanical properties required for the product or products obtained with the compound in question.

When using a cement binder, the above compound is mixed with enough water to make it fluid.

This fluid mixture is then cast into forms according to normal building trade practice in order to realise concrete items.

Once the mixture has hardened, the items are taken out of the forms and allowed to weather.

The final stages of the procedure in question consist of treating the surface of the items with acids (preferably HCL) and then washing the same to remove all residue of these acids and the products of the chemical reaction.

In this regard, it should be noted that the purpose of this surface treatment with acids is carried out in order to make the items both in appearance and to the touch, similar to terracotta items produced with conventional baking procedures.

As mentioned previously, the fact that the procedure in question is carried out at ambient temperature, makes it ideal to produce items in particularly complex shapes, as well as items having a particularly thin thickness without the risk of breakage and items not having the dimensional limitation of conventional terracotta items and items with internal reinforcement giving the same satisfactory mechanical properties.

Another considerable advantage of the procedure is that the "raw material" used- namely terracotta aggregates - may in fact consist of scraps and dust from conventional processing of terracotta items, or of fragments or scraps of the items themselves.

From this point of view the process in question is not only particularly inexpensive but also environmental friendly in that it permits the recovery or recycling of terracotta dust and fragments which would otherwise be lost.

Finally, it should be noted that in the above mixture produced by mixing the aggregate and the binder with water, further additives as required may be added in marginal percentages such as colouring, consolidating, fluidifying, water-proofing, anti-freeze or detaching agents, as used in the field of concrete manufacture.

## Claims

1. A procedure for the cold working of items in agglomerate consisting of crushed terracotta characterised in consisting of the predetermined succession of the following processing stages:
• realisation of a mixture consisting of an aggregate realised with terracotta dust and/or fragments and of cement and/or binding agents;
• mixture with water of this mixture - only if a cement binder is used - in order to make the mixture fluid;
• cast of this mixture in its fluid state in forms of the required shape;
• extraction from these forms of the hardened items;
• maturing of the items;
• surface treatment of the items with acids (preferably HCL);
• washing of the items to remove all acid residues and the products of the chemical reaction.

2. Procedure for the cold working of items in agglomerate consisting of crushed terracotta according to claim 1, characterised in that the composition of the mixture between the terracotta aggregate and cement (or binding resins) involves the use of an amount of cement (or binding resins) preferably between 200 and 600 kg per cubic metre of agglomerate produced.

3. A procedure for the cold working of agglomerate items consisting of crushed terracotta according to claim 1, characterised in that to the above mixture consisting of terracotta agglomerate and binding agents other components are added in marginal percentages such as colouring, consolidating, fluidifying, water-proofing, anti-freeze or detaching agents as used in the field of concrete manufacture.
